# EUROPÄISCHE PATENTSCHRIFT

(11) **EP 2 513 656 B1**
(45) Veröffentlichungstag und Bekanntmachung des Hinweises auf die Patenterteilung: **07.05.2014**
(21) Anmeldenummer: 10794880.4
(22) Anmeldetag: 09.12.2010
(51) Int. Cl.: F03D 11/02, G01R 27/20, H02P 9/10

(54) **VERFAHREN UND VORRICHTUNG ZUR DÄMPFUNG VON TORSIONSSCHWINGUNGEN**
METHOD AND DEVICE FOR DAMPING TORSIONAL OSCILLATIONS
PROCÉDÉ ET DISPOSITIF D'AMORTISSEMENT DES VIBRATIONS DE TORSION

(30) Priorität: 19.12.2009 DE 102009059669
(43) Veröffentlichungstag der Anmeldung: 24.10.2012
(73) Patentinhaber: Robert Bosch GmbH, 70469 Stuttgart (DE)
(72) Erfinder: VATH, Andreas, 63849 Leidersbach (DE); HERRMANN, Tobias, 63741 Aschaffenburg (DE); SÄTTLER, Hanno, 04317 Leipzig (DE)
(74) Vertreter: Thürer, Andreas
(86) Internationale Anmeldenummer: PCT/EP2010/007497
(87) Internationale Veröffentlichungsnummer: WO 2011/072820

(56) Entgegenhaltungen:
- EP-A1- 1 714 809
- DE-A1- 10 309 670
- JP-A- 1 060 286
- US-A1- 2006 244 425
- US-A1- 2009 025 467

## Beschreibung

Die Erfindung betrifft ein Verfahren zur Dämpfung von Torsionsschwingungen, insbesondere im Antriebsstrang von Energieerzeugungsanlagen, durch eine Generatorregelung sowie eine Vorrichtung zur Durchführung des Verfahrens.

### Stand der Technik

Antriebsstränge, bestehend aus Komponenten, wie beispielsweise Getrieben, Kupplungen und Verbindungselementen (Wellen), sind wichtige Bestandteile verschiedener elektrischer Energieerzeugungsanlagen, wie z.B. von Windenergieanlagen, Wasserkraftanlagen etc.

Der Antriebsstrang erfüllt die Aufgabe, eine mechanische Verbindung zwischen einem Antrieb (beispielsweise einem Rotor einer Windenergieanlage) und einem Abtrieb (beispielsweise einem entsprechenden Generator) herzustellen, über welche durch eine Drehbewegung Energie übertragen wird. Antriebsstrangkomponenten, wie Getriebe, dienen dazu, die Drehzahl und das Drehmoment, die am Antrieb anliegen, auf Werte zu übersetzen, die dem Arbeitsbereich des Generators entsprechen. Kupplungen werden bei Bedarf für eine Trennung zwischen An- und Abtrieb genutzt und Wellen stellen die mechanische Verbindung zwischen den beteiligten Komponenten her. Auch weitere Komponenten, wie mechanische Bremsen oder dergleichen, können im Antriebsstrang integriert sein.

Da die beteiligten Komponenten nicht beliebig starr gefertigt werden können, sondern eine endliche Steifigkeit besitzen, können sie zu Eigenschwingungen angeregt werden. Eine solche Anregung kann beispielsweise durch eine nicht konstante Eingangsleistung (bei Windenergieanlagen beispielsweise durch Windstöße oder Windturbulenzen), durch äußere Störungen oder durch Eigenbewegungen anderer Anlagekomponenten erfolgen. Auch Schwingungen anderer Herkunft können in Schwingungen im Antriebsstrang resultieren, bei einer Windenergieanlage beispielsweise Turmschwingungen oder Schwingungen aufgrund der Zahneingriffe eines Getriebes.

Schwingungen wirken sich nachteilig auf die Lebensdauer der beteiligten Komponenten, insbesondere des Getriebes, aus. Stetige Schwellbelastungen erhöhen den Verschleiß der betroffenen Bauteile und führen zu kürzeren Austauschintervallen, was eine finanzielle und technische Belastung für den Anlagen- und Netzbetreiber bedeutet und den Antagenertrag vermindert. Insbesondere unter dem Gesichtspunkt der voraussichtlich zunehmenden Verbreitung von Windenergieanlagen im Offshore-Bereich in absehbarer Zukunft spielt dieser Aspekt eine immer größere Rolle, da der Austausch beschädigter Komponenten dort weiter erschwert wird. Es ergibt sich daher das Ziel, diese Schwingungen zu reduzieren, um die Lebensdauer der Komponenten zu erhöhen.

Wenngleich die vorliegende Erfindung im Rahmen dieser Anmeldung vornehmlich in Bezug auf Windenergieanlagen beschrieben wird, ist sie keinesfalls auf Windenergieanlagen oder Einrichtungen zur Energieerzeugung beschränkt, sondern prinzipiell bei allen Vorrichtungen einsetzbar, bei denen Torsionsschwingungen von Wellen, Achsen und dergleichen, insbesondere auch von Wellen und Achsen mit zwischengeschalteten Getrieben, auftreten können.

Zur Vermeidung von Schwingungen ist bekannt, den Generator einer Energieerzeugungsanlage durch äußere Stellsignale einstellbar auszugestalten. Bei dem Generator kann es sich dabei beispielsweise um einen doppeltgespeisten Asynchrongenerator handeln, der statorseitig direkt mit dem Netz verbunden und läuferseitig über einen Gleichspannungszwischenkreis versorgt wird, wodurch dem Läufer Spannungen und Ströme unterschiedlicher Frequenz und Amplitude aufgeprägt werden können. Auch Synchrongeneratoren, die über Umrichter mit Gleichstromzwischenkreis ans Netz geschaltet werden und dementsprechend einstellbar sind, werden im Stand der Technik verwendet. Durch die genannten Stellmöglichkeiten kann dem Generator ein Moment vorgegeben werden, das an die schadenverursachenden Schwingungen angepasst ist, wodurch es diese verringert und das im Antriebsstrang anliegende Torsionsmoment entsprechend dämpft.

So ist aus der DE 10 2007 019 907 B4 ein Verfahren bekannt, das anhand der Generatordrehzahl über ein schwingungsfähiges Verzögerungselement eine Regeldifferenz bildet, woraus ein Korrekturmoment für eine Generatorsteuerung bestimmt wird.

Ein ähnlicher Ansatz wird in der US 2008/0067815 verfolgt, wonach aus Änderungen in der Generatordrehzahl ein Signal erzeugt wird, durch das eine Dämpfung über das Generatorstellmoment realisiert wird.

Die EP 1 507 331 A2 beschreibt ein Verfahren, in dem speziell für Synchrongeneratoren aus der Generatordrehzahl ein Generatorstellmoment erzeugt wird.

Als nachteilig an all diesen Lösungen ist anzusehen, dass die schadenverursachenden Schwingungen des Torsionsmomentes nur mit einer eingeschränkten Genauigkeit ermittelt werden und demnach auch die Güte der Ausgleichsvorgänge begrenzt ist. Insbesondere die Ermittlung der Schwingungen aus der Drehzahl ist mit beträchtlichen Ungenauigkeiten behaftet.

Durch Filterung des Drehzahlsignals lässt sich dieses Problem teilweise beheben, dies erhöht aber den Dämpfungsaufwand und kann zu weiteren unerwünschten Nebeneffekten, wie Phasenverschiebungen der Signale, führen.

In der US 7,173,399 B2 wird hierzu vorgeschlagen, das Torsionsmoment über Drehmomentsensoren zu messen und über lastgeführte Umrichter und Stromzwischenkreise ein entsprechendes Stellmoment zu generieren. Anstelle aus der Drehzahl ein Stellmoment abzuleiten, wird hier also direkt von dem Torsionsmoment selbst ausgegangen, wodurch die Genauigkeit der Dämpfung verbessert wird. Allerdings ist hier der Einsatz mindestens eines weiteren Sensors vonnöten, um das zu dämpfende Torsionsmoment zu erfassen. Die Dämpfung ist also nicht alleine mit der bereits in einer Anlage bestehenden Hardware zu erreichen.

Bei den genannten Verfahren ergibt sich zusätzlich das Problem, dass dem am Generator anliegenden Moment durch die Ausgleichsvorgänge selbst Schwingungen aufgeprägt werden, die in der Regel zu einer entsprechend ungleichmäßigen elektrischen Ausgangsleistung führen. US 2006244425 A1 verwendet daher zwei Sensoren und regelt den Generator so, dass er dämpfende Drehmomente erzeugt. Es sind jedoch magnetostriktive Sensoren erforderlich.

Es besteht daher ein Bedarf an Lösungen, die eine kontinuierliche Ermittlung eines Torsionsmoments, insbesondere in einem Antriebsstrang, auf Grundlage bereits üblicherweise mittels vorhandener Hardware ermittelter Größen sowie eine Gegenregelung durch Einstellung eines Generatormoments ermöglichen. Zusätzlich besteht ein Bedarf an Lösungen zur Glättung von schwingungsbedingten Schwankungen in der Ausgangsleistung von derartigen Generatoren.

### Offenbarung der Erfindung

Vor diesem Hintergrund stellt die vorliegende Erfindung ein Verfahren zur Dämpfung von Torsionsschwingungen in einer Energieerzeugungsanlage, sowie eine Vorrichtung, insbesondere eine Regeleinrichtung einer Energieerzeugungsanlage, mit den Merkmalen der unabhängigen Patentansprüche bereit. Vorteilhafte Weiterbildungen sind Gegenstand der Unteransprüche sowie der nachfolgenden Beschreibung.

### Vorteile der Erfindung

Auf Grundlage der vorgeschlagenen Maßnahmen bietet die vorliegende Erfindung Lösungen für zumindest die drei zuvor erläuterten Probleme:
Zunächst wird das zu dämpfende bzw. auszuregelnde Torsionsmoment genauer ermittelt und direkt dem Regler zugeführt, wodurch eine höhere Genauigkeit gegenüber drehzahlbasierten Dämpfungsverfahren erreicht wird.

Die Ermittlung des Torsionsmoments kann ferner ohne zusätzliche Sensoren, alleine mittels der bereits in der Anlage vorhandenen Sensorausstattung sowie unter zusätzlichem Einsatz von Rechenmodellen erfolgen.

Die sich bei diesem Verfahren einstellenden Schwankungen in der Generatorausgangsleistung können schließlich durch eine Dämpfungseinrichtung geglättet werden, bevor die erzeugte elektrische Energie in das Netz eingespeist wird.

In Energieerzeugungsanlagen ist in der Regel die Drehzahl auf der An- und/oder der Abtriebsseite bekannt. Auf Antriebsseite, beispielsweise bei dem Rotor einer drehzahlvariablen Windenergieanlage, wird sie durch Drehzahlgeber aufgenommen und an den Anlagenregler übergeben, welcher auf Grundlage dieses Werts den Betrieb der Anlage steuert oder regelt. Auf Generatorseite kann die Drehzahl aus elektrischen Größen im Generator abgeleitet werden, sofern sie nicht ebenfalls über einen Drehzahlgeber ermittelt wird. Bei einigen Anlagen ist es üblich, die Drehzahl nur auf Generatorseite zu ermitteln und in die Anlagensteuerung bzw. -regelung einzuspeisen.

Im Rahmen dieser Anmeldung sei unter "Rotor" der beispielsweise durch Wasser oder Wind beaufschlagte und angetriebene Teil einer Energieerzeugungsanlage bezeichnet. Der mobile Teil des Generators wird hingegen mit dem Begriff "Läufer" bezeichnet.

In beiden Fällen kann vorteilhafterweise das Torsionsmoment aus den in der Anlage bekannten Größen ermittelt werden, wobei die Genauigkeit des ermittelten Torsionsmoments größer ist, wenn neben der Generatordrehzahl auch die Rotordrehzahl gemessen wird. Eine Ermittlung lediglich über die Generatordrehzahl ermöglicht hingegen eine besonders schnelle und einfache Realisierung ohne einen zusätzlichen Sensor in entsprechenden Anlagen. Beiden Varianten liegt das Prinzip zugrunde, kontinuierlich oder zeitdiskret den Verdrehwinkel zwischen An- und Abtriebsseite zu bestimmen und daraus über ein entsprechendes Rechenmodell das Torsionsmoment, welches im Antriebsstrang anliegt, zu ermitteln. Das vorteilhafterweise verwendete Rechenmodell basiert auf den Bewegungsgleichungen eines Zwei-Massen-Drehschwingers. Der Verdrehwinkel kann dabei aus den Drehzahlen an Rotor-und Generatorseite erhalten werden.

Ist nur die Drehzahl an Generatorseite bekannt, kann mittels dieser Drehzahl und dem am Generator anliegenden Moment auf die rotorseitige Winkellage geschlossen und somit ebenfalls der Verdrehwinkel bestimmt werden. Dies kann vorteilhafterweise ebenfalls durch ein Rechenmodell, welches auf den Bewegungsgleichungen eines Zwei-Massen-Drehschwingers basiert, erfolgen.

Mit Filtern können unerwünschte hoch- oder niederfrequente Schwingungen unterdrückt werden, die nicht gedämpft werden können oder sollen und daher nicht Eingang in den Dämpfungsregler finden sollen. Dem Dämpfungsregler wird vom übergeordneten Anlagenregler das Anlagenmoment zugeführt und dieser bestimmt hieraus sowie aus dem ermittelten Torsionsmoment das Stellmoment für den Generator, welches dann über die entsprechende Leistungselektronik eingestellt werden kann. Auf diese Weise kann ein Stellmoment mit hoher Genauigkeit generiert werden, ohne dass der Einsatz zusätzlicher Sensorik erforderlich wäre.

Zweckmäßigerweise werden bei einer erfindungsgemäßen Regelung des Generators eine oder mehrere Begrenzungen überwacht. Z.B. kann überwacht werden, dass eine maximale Generatorleistung P=M·ω nicht durch den Reglereingriff überschritten wird. Außerdem ist eine Überwachung denkbar, mit der eine Leistungsänderung über die Zeit begrenzt wird (dP/dt-Begrenzung). Ebenso zweckmäßig ist eine Begrenzung des Generatormoments M und/oder der Generatormomentänderung dM/dt.

Des Weiteren wird durch die Erfindung das Problem der schwankenden Ausgangsleistung besonders vorteilhaft gelöst, indem eine Dämpfungseinrichtung vor den Netzeinspeisungspunkt geschaltet wird. Hierzu können ein Zwischenkreiskondensator des Gleichspannungszwischenkreises und/oder weitere elektrische oder mechanische Energiespeicher verwendet werden, die dem Zwischenkreiskondensator oder anderen Komponenten des Antriebsstrangs parallel geschaltet werden können. Dabei kann die Zwischenkreisspannung variabel oder konstant gehalten werden.

Durch diese Verfahren lässt sich vermeiden, dass dem Elektrizitätsnetz oder einem angeschlossenen Verbraucher unerwünschte Schwingungen aufgeprägt werden. Außerdem lässt sich die vorgeschlagene Lösung zur positiven Beeinflussung weiterer Anlagengrößen einsetzen, die mit dem Torsionsmoment direkt oder indirekt gekoppelt sind, wie beispielsweise zur Dämpfung von seitlichen Turmschwingungen in einer Windenergieanlage und/oder zur Verringerung von Belastungen in den Rotorblättern.

Weitere Vorteile und Ausgestaltungen der Erfindung ergeben sich aus Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen der Zeichnung schematisch dargestellt und wird im Folgenden unter Bezugnahme auf die Zeichnung ausführlich beschrieben.

### Figurenbeschreibung

- Figur 1: zeigt eine Energieerzeugungsanlage gemäß einer besonders bevorzugten Ausführungsform der Erfindung.
- Figur 2: zeigt eine Energieerzeugungsanlage gemäß einer weiteren bevorzugten Ausführungsform der Erfindung.
- Figur 3: zeigt Diagramme zur Veranschaulichung des erfindungsgemäßen Verfahrens gemäß besonders bevorzugter Ausführungsformen der Erfindung im Vergleich zum Stand der Technik.
- Figur 4: zeigt ein Diagramm zur Veranschaulichung des erfindungsgemäßen Verfahrens gemäß einer besonders bevorzugten Ausführungsform der Erfindung im Vergleich zum Stand der Technik.
- Figur 5: zeigt eine Energieversorgungsanlage gemäß einer besonders bevorzugten Ausführungsform der Erfindung mit Mitteln zur Glättung einer Generatorausgangsleistung.

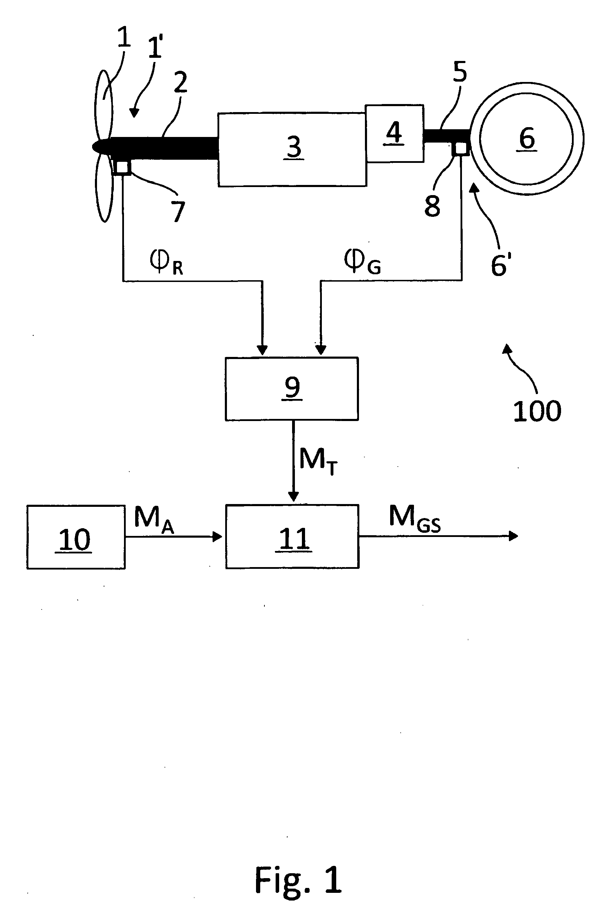

Figur 1 zeigt den grundlegenden Aufbau 100 einer Einrichtung zur Durchführung eines zugehörigen Verfahrens gemäß einer besonders bevorzugten Ausführungsform der Erfindung, wobei in diesem Fall eine Winkellage an Rotor- und Generatorseite ermittelt wird.

Dargestellt sind ein Rotor 1 und ein Generator 6 einer Windenergieanlage, die durch einen Antriebsstrang 2-5, bestehend aus einer Rotorabtriebswelle 2, einem Getriebe 3, einer Kupplung 4 und einer Generatorantriebswelle 5 mechanisch miteinander verbunden sind. Der Rotor ist an einem rotorseitigen Ende 1' des Antriebsstrangs 2-5, der Generator an einem generatorseitigen Ende 6' angebracht. Zwei Lagegeber 7, 8 an der Rotor- 1' und der Generatorseite 6' ermitteln die Winkellagen f_{R} (Rotor 1) und f_{G} (Generator 6) die Eingang in ein Modell 9 des Antriebsstrangs 2-5 finden. Das Modell 9 kann insbesondere die Steifigkeit des Antriebsstranges abbilden und auf einer Schätzung oder einer Messung basieren. Beispielsweise wird aus einer Steifigkeitskennlinie bzw. bekannter Steifigkeit c des Systems in dem Modell 9 bei Vernachlässigung von Dämpfungstermen über die Gleichung M_{T} = c•Δϕ aus der gemessenen Winkeldifferenz Δϕ das Torsionsmoment M_{T} ermittelt, das zusammen mit einem aus einer übergeordneten Anlagenregelung 10 stammenden Soll-Anlagenmoment M_{A} einen Eingang für einen Dämpfungsregler 11 darstellt, in dem das Stellsignal für den Generator 6 M_{GS} erzeugt wird. Dabei wird bspw. die Differenz M_{A}-M_{T} auf einen Regler, z.B. P-Regler, gegeben und diese verstärkte Regelabweichung wiederum zu M_{A} addiert (Regler mit Vorsteuerung).

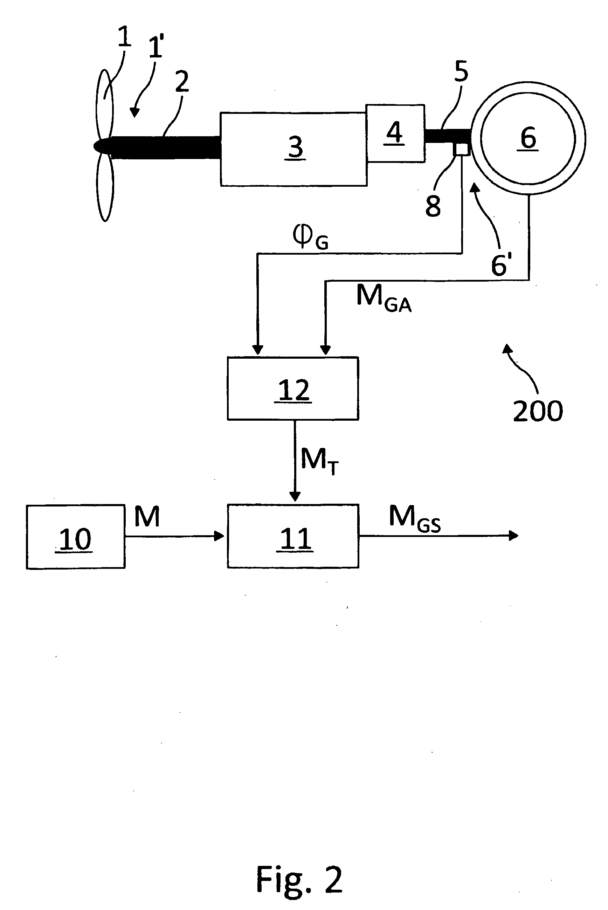

Figur 2 zeigt den grundlegenden Aufbau 200 einer Einrichtung zur Durchführung eines zugehörigen Verfahrens gemäß einer weiteren bevorzugten Ausführungsform der Erfindung, wobei in diesem Fall jedoch nur die Winkellage am Generator 6 bekannt ist bzw. ermittelt wird. Gleiche oder gleichwirkende Elemente wie in Figur 1 sind mit identischen Bezugszeichen angegeben und werden der Übersichtlichkeit halber nicht erneut erläutert.

Im Rahmen dieser Ausführungsform wird neben der Generatorwinkellage f_{G} das Generatormoment M_{GA} in ein entsprechend angepasstes Anlagenmodell 12 gegeben, in dem intern der Rotorwinkel f _{R} und mit dessen Hilfe dann das Torsionsmoment M_{T} ermittelt werden kann. Das Anlagenmodell 12 kann ein 2-Massen-Schwinger-Modell des Triebstrangs aufweisen. Aus der Beschleunigung des Generators (Ableitung der Generatordrehzahl) und dem aktuellen Generatormoment M_{GA} wird auf Grundlage des Modells über eine bekannte Steifigkeit und bekannte Massenverhältnisse auf die Beschleunigung des Rotors rückgeschlossen. Durch zweifache Integration ergeben sich die Winkel an beiden Enden und damit die Winkeldifferenz Δϕ. Auch hier beruht die Ermittlung des Torsionsmoments M_{T} also auf zwei Winkellagewerten, nämlich einer Generatorwinkellage f_{G} und einer Rotorwinkellage f _{R}, wobei jedoch die Rotorwinkellage f _{R} aus dem Generatormoment M_{GA} in dem Anlagenmodell 12 bestimmt wird. Zusammen mit dem aus der übergeordneten Anlagenregelung 10 stammenden Soll-Anlagenmoment M_{A} findet das Torsionsmoment M_{T} Eingang in den Dämpfungsregler 11, in dem wiederum das Stellsignal für den Generator M_{GS} erzeugt wird.

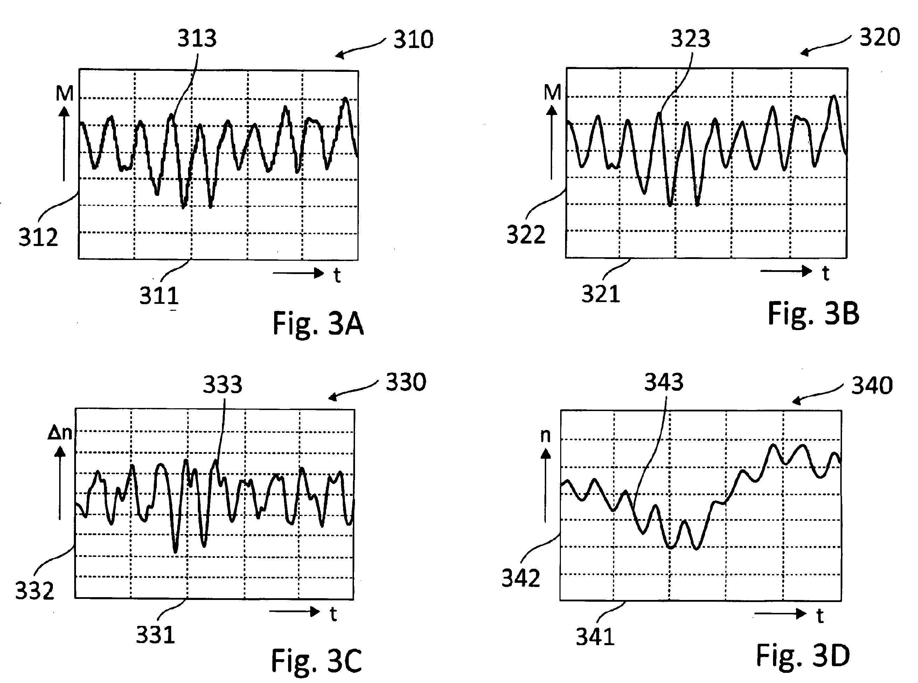

In den Teilfiguren 3A, 3B, 3C und 3D der Figur 3 sind Diagramme 310-340 dargestellt, die das erfindungsgemäße Verfahren im Vergleich zum Stand der Technik veranschaulichen. In den Diagrammen 310 (Figur 3A), 320 (Figur 3B), 330 (Figur 3C) und 340 (Figur 3D) ist auf den y-Achsen 312, 322, 332 und 342 jeweils ein Torsionsmoment M im Getriebe (Diagramm 310), ein aus Winkellagen ermitteltes Torsionsmoment M (Diagramm 320), eine Drehzahldifferenz Δn (Diagramm 330) und eine Generatordrehzahl n (Diagramm 340) über eine Zeit t von 10 s auf den x-Achsen 311, 321, 331 und 341 aufgetragen.

Figur 3A zeigt den Zeitverlauf 313 eines tatsächlich im Antriebsstrang, im vorliegenden Beispiel am Sonnenrad eines dreistufigen Getriebes mit einer Planeten- und zwei Stirnradstufen, anliegenden Torsionsmoments, das deutlich sichtbar durch Schwingungen von ca. 2 Hz, entsprechend Eigenschwingungen des Antriebsstrangs, beeinflusst ist. Die 2 Hz-Schwingungen sind von weiteren, niederfrequenteren Schwingungen, beispielsweise dem Turmschatten und Turmeigenschwingungen, sowie von hochfrequenten Schwingungen, wie sie durch die Zahneingriffe im Getriebe entstehen, überlagert.

In Figur 3B ist demgegenüber ein gemäß einer besonders bevorzugten Ausführungsform der Erfindung über ein Modell aus dem Verdrehwinkel bzw. aus Winkellagen bestimmtes Torsionsmoment 323 dargestellt. Das Torsionsmoment 323 zeigt nahezu einen identischen Verlauf zu dem gemessenen Moment im Getriebe 313, jedoch ohne die hochfrequenten Anteile der Getriebeschwingungen, die durch den integralen Charakter der Winkellagen gegenüber den Drehzahlen 333 nahezu vollständig ausgefiltert werden. Da diese hochfrequenten Schwingungen ohnehin nicht ausregelbar sind, bietet sich dieses Signal sehr gut für die aktive Dämpfungsregelung der Torsionsschwingungen an.

Figur 3C zeigt im zeitlichen Verlauf eine Drehzahldifferenz 333, die gemäß Stand der Technik zur Ausregelung von Schwingungen herangezogen wird. Figur 3D zeigt eine tatsächliche Generatordrehzahl 343.

Wie in der Zusammenschau der Teilfiguren 3A bis 3C zu erkennen, entspricht das aus den Winkellagen ermittelte Torsionsmoment 323 dem realen Torsionsmoment im Getriebe sehr viel genauer als die gemäß Stand der Technik beispielsweise verwendete Drehzahldifferenz 333 (siehe Figur 3C). Es wird daher deutlich, dass das über das beschriebene Verfahren ermittelte Moment 323 das tatsächlich anliegende Moment 313 deutlich besser abbildet als die Drehzahlverfahren 333 und daher als Eingang für eine regelungstechnische Dämpfung besser geeignet ist. Die großen Abweichungen zwischen dem Verlauf der Drehzahldifferenz 333 von Rotor und Generator sowie dem Verlauf der Generatordrehzahl 343 gegenüber dem tatsächlichen Verlauf des Torsionsmoments 313 lassen hingegen erwarten, dass eine auf diesen Signalen basierende Regelung, wie sie dem Stand der Technik entspricht, nicht in der Lage sein wird, dieselbe Güte wie die Regelung über die Winkellagen zu erreichen.

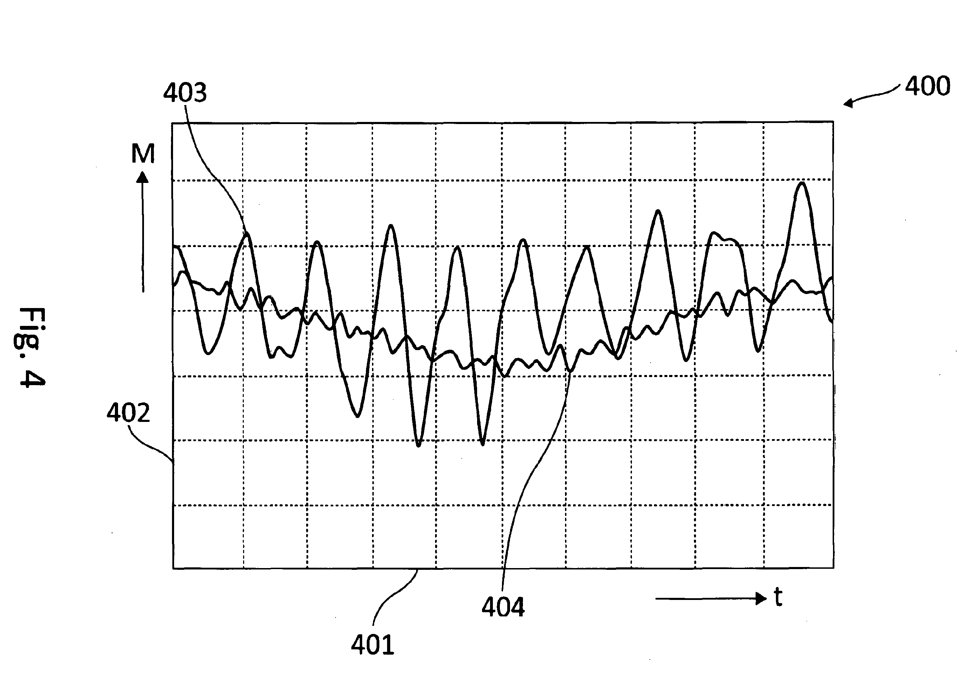

In Figur 4 ist in Form eines Diagramms 400 ein Torsionsmoment 403 ohne Dämpfung und ein Torsionsmoment 404 nach einer Dämpfung gemäß einer besonders bevorzugten Ausführungsform in Form eines Moments M auf der y-Achse 402 gegenüber eine Zeit von 10 s auf der x-Achse 401 dargestellt. Wie ersichtlich, wird durch das Dämpfungsverfahren gemäß der bevorzugten Ausführungsform eine Torsionsmomentenschwingung gegenüber dem unbedämpften Zustand deutlich vermindert.

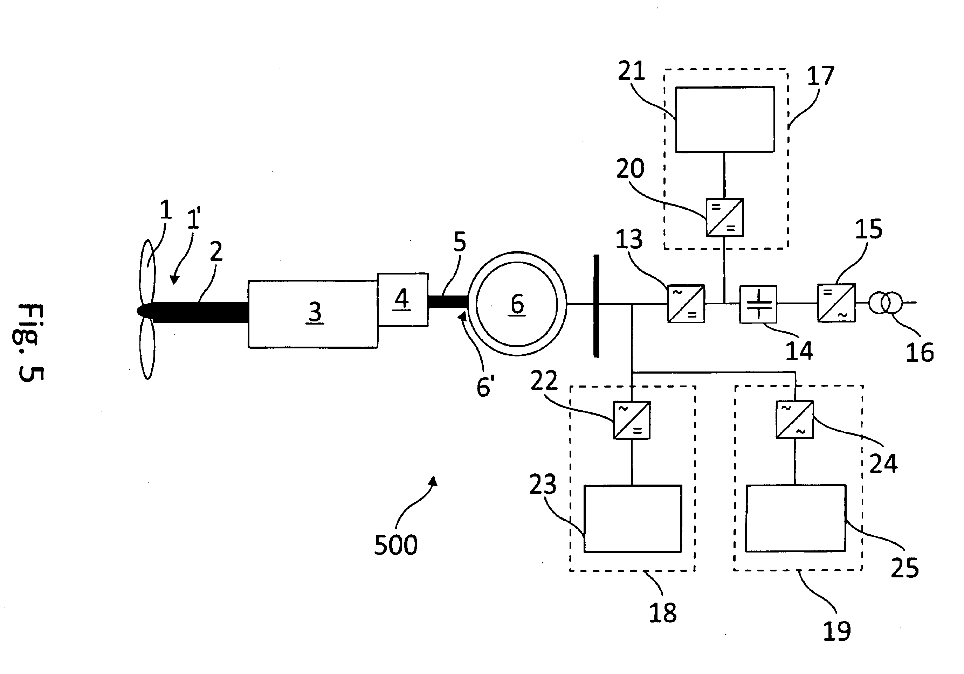

Figur 5 zeigt den grundlegenden Aufbau 500 einer Einrichtung zur Durchführung eines zugehörigen Verfahrens gemäß einer besonders bevorzugten Ausführungsform der Erfindung, wobei mögliche, auch alternative, Ausführungsformen mit Speicherblöcken 17, 18, 19 zur Glättung der Generatorausgangsleistung dargestellt sind. Gleiche oder gleichwirkende Elemente wie in den Figuren 1 und 2 sind mit identischen Bezugszeichen angegeben und werden der Übersichtlichkeit halber nicht erneut erläutert.

Zur Dämpfung kann einerseits bereits ein Zwischenkreiskondensator 14 des Gleichspannungszwischenkreises dienen, der zwischen dem generatorseitigen Gleichrichter 13 und dem netzseitigen Wechselrichter 15 angeordnet ist, bevor die Ausgangsspannung über den Netztransformator 16 auf Netzspannung transformiert wird. Der Zwischenkreiskondensator 14 kann dabei zum Betrieb mit variabler oder mit konstanter Gleichspannung ausgeführt sein.

Alternativ oder zusätzlich dazu lassen sich gemäß bevorzugter Ausführungsformen weitere Speicherblöcke 17, 18 und 19 mit Energiespeichern 21, 23 und 25 einsetzen. Diese Speicherblöcke 17, 18 und 19 können dabei einzeln oder auch in beliebiger Kombination, insbesondere im Rahmen einer Kosten/Nutzen-Abwägung, verwendet werden.

Der Speicherblock 17 stellt eine Ausführungsform eines Dämpfungssystems dar, das parallel zum Zwischenkreis betrieben wird. Das Dämpfungssystem verfügt dafür über einen separaten DC-DC-Wandler 20, um eine variable Betriebsspannung des DC-Speichers 21 und einen variablen Leistungsfluss zu ermöglichen.

Der Speicherblock 18 stellt eine Ausführungsform des Dämpfungssystems dar, das direkt an den Generator angeschlossen wird. Es ist dabei unabhängig vom Aufbau des Hauptumrichters 13, 14 und 15 eine Kopplung sowohl an die Ständer- wie auch die Läuferwicklung des Generators 6 möglich. Der vom Generator 6 erzeugte Drehstrom wird über einen AC-DC-Wandler 22, z.B. einen B6-Gleichrichter, in eine Gleichspannung variabler Höhe gewandelt. Die Speicherung der Dämpfungsenergie erfolgt in einem geeigneten DC-Speicher 23.

Der Speicherblock 19 zeigt eine Ausführungsform des Dämpfungssystems mit ebenfalls direkter elektrischer Kopplung an die stator- oder rotorseitigen Generatoranschlüsse. Im Unterschied zu Speicherblock 18 ist hier aber ein AC-Speichersystem 25 vorgesehen, das über einen AC-AC-Konverter 24 gespeist wird. Ein solches Speichersystem kann z.B. ein an einen Drehstrommotor gekoppeltes Schwungrad darstellen, das vorteilhafterweise eine relativ hohe Leistungsdichte bereitstellt.

## Patentansprüche

1. Verfahren zur Dämpfung von Torsionsschwingungen in einer Energieerzeugungsanlage (100, 200) mit einem Antriebsstrang (2-5), einem an einem rotorseitigen Ende (1') des Antriebsstrangs (2-5) angebrachten, durch Wasser oder Wind beaufschlagten Rotor (1) und einem über den Antriebsstrang (2-5) angetriebenen, an einem generatorseitigen Ende (6') des Antriebsstrangs (2-5) angebrachten Generator (6), **dadurch gekennzeichnet, dass** zumindest unter Verwendung einer Winkellage (ϕ_{G}) des Antriebsstrangs (2-5) an seinem generatorseitigen Ende (6') und einer Winkellage (ϕ_{R}) des Antriebsstrangs (2-5) an seinem rotorseitigen Ende ein auf den Antriebsstrang (2-5) wirkendes Torsionsmoment (M_{T}, 323) ermittelt und zur Regelung des Generators (6) verwendet wird.

2. Verfahren nach Anspruch 1, wobei die Winkellage (ϕ_{G}) des Antriebsstrangs (2-5) an seinem generatorseitigen Ende (6') unter Verwendung eines generatorseitigen Lagegebers (8) bestimmt wird.

3. Verfahren nach einem der vorstehenden Ansprüche, wobei eine Winkellage (ϕ_{R}) des Antriebsstrangs (2-5) an seinem rotorseitigen Ende (6') unter Verwendung eines rotorseitigen Lagegebers (7) bestimmt oder über ein Modell aus verschiedenen Generatorgrößen, insbesondere elektrischem Generatormoment (M_{GA}) und Generatorrotorwinkellage, abgeleitet werden.

4. Verfahren nach einem der vorstehenden Ansprüche, wobei aus dem Torsionsmoment (M_{T}, 323) und einem von einer Anlagenregelung (10) bereitgestellten Sollmoment (M_{A}) ein Generatorsollmoment (M_{GS}) zur Ansteuerung des Generators bestimmt wird.

5. Verfahren nach Anspruch 4, wobei das Generatorsollmoment (M_{GS}) unter Einhaltung einer Generatorsollmomentbegrenzung und/oder Generatorsollmomentänderungsbegrenzung bestimmt wird.

6. Verfahren nach einem der vorstehenden Ansprüche, wobei zur Ermittlung des Torsionsmoments (M_{T}, 323) und/oder zur Ableitung der Winkellage (ϕ_{R}) des Antriebsstrangs (2-5) ein die Energieerzeugungsanlage (100, 200) abbildendes Modell (9, 12), insbesondere auf Grundlage eines Zweimassen-Drehschwingers, verwendet wird.

7. Verfahren nach einem der vorstehenden Ansprüche, wobei die Regelung des Generators (6) unter Einhaltung einer Leistungsbegrenzung und/oder einer Leistungsänderungsbegrenzung durchgeführt wird.

8. Verfahren nach einem der vorstehenden Ansprüche, wobei das Torsionsmoment (M_{T}, 323) kontinuierlich oder zeitdiskret ermittelt wird.

9. Verfahren nach einem der vorstehenden Ansprüche, wobei wenigstens eine an einen Gleichspannungszwischenkreis, einen Generatorläufer und/oder einen Generatorständer des Generators (6) angeschlossen Energiespeichereinrichtung (21, 23, 25) mit zugeordneten Gleichstrom/Gleichstrom-Wandlermitteln (20), Wechselstrom/Gleichstrom-Wandlermitteln (22) und/oder Wechselstrom/Wechselstrom-Wandlermitteln (24) zur Glättung einer Ausgangsleistung des Generators (6) bereitgestellt wird.

10. Vorrichtung, insbesondere Regeleinrichtung einer Energieerzeugungsanlage (100, 200), die zur Durchführung eines Verfahrens nach einem der vorstehenden Ansprüche eingerichtet ist.

## Claims

1. Method for damping torsional vibrations in an energy generation installation (100, 200) with a drive train (2-5), a rotor (1) fitted to a rotor-side end (1') of the drive train (2-5) and subjected to water or wind, and a generator (6) driven via the drive train (2-5) and fitted to a generator-side end (6') of the drive train (2-5), **characterized in that**, at least using an angular position (ϕ_{G}) of the drive train (2-5) at its generator-side end (6') and an angular position (ϕ_{R}) of the drive train (2-5) at its rotor-side end, a torque (M_{T}, 323) acting on the drive train (2-5) is determined and used for the closed-loop control of the generator (6).

2. Method according to Claim 1, wherein the angular position (ϕ_{G}) of the drive train (2-5) at its generator-side end (6') is determined using a generator-side position encoder (8).

3. Method according to one of the preceding claims, wherein an angular position (ϕ_{R}) of the drive train (2-5) at its rotor-side end (6') is determined using a rotor-side position encoder (7) or is derived, via a model, from different generator variables, in particular electrical generator torque (M_{GA}) and generator rotor angular position.

4. Method according to one of the preceding claims, a setpoint generator torque (M_{GS}) for driving the generator being determined from the torque (M_{T}, 323) and a setpoint torque (M_{A}) provided by a closed-loop installation control (10).

5. Method according to Claim 4, wherein the setpoint generator torque (M_{GS}) is determined whilst maintaining a setpoint generator torque limitation and/or setpoint generator torque variation limitation.

6. Method according to one of the preceding claims, wherein in order to determine the torque (M_{T}, 323) and/or to derive the angular position (ϕ_{R}) of the drive train (2-5), a model (9, 12) simulating the energy generation installation (100, 200), in particular on the basis of a two-mass torsional vibration system, is used.

7. Method according to one of the preceding claims, wherein the closed-loop control of the generator (6) is performed whilst maintaining a power limitation and/or a power variation limitation.

8. Method according to one of the preceding claims, wherein the torque (M_{T}, 323) is determined continuously or time-discretely.

9. Method according to one of the preceding claims, wherein at least one energy storage device (21, 23, 25), which is connected to a DC voltage intermediate circuit, a generator armature and/or a generator stator of the generator (6) and has associated DC-to-DC converter means (20), AC-to-DC converter means (22) and/or AC-to-AC converter means (24), is provided for smoothing an output power of the generator (6).

10. Device, in particular a closed-loop control device of an energy generation installation (100, 200), which is designed to implement a method according to one of the preceding claims.

## Revendications

1. Procédé d'amortissement des vibrations de torsion dans une installation de génération d'énergie (100, 200) comprenant une chaîne cinématique (2-5), un rotor (1) monté à une extrémité côté rotor (1') de la chaîne cinématique (2-5), sollicité par l'eau ou le vent, et un générateur (6) entraîné par le biais de la chaîne cinématique (2-5), monté sur une extrémité côté générateur (6') de la chaîne cinématique (2-5), **caractérisé en ce qu'**au moins en utilisant une position angulaire (ϕ_{G}) de la chaîne cinématique (2-5) à son extrémité côté générateur (6') et une position angulaire (ϕ_{R}) de la chaîne cinématique (2-5) à son extrémité côté rotor, un couple de torsion (M_{T}, 323) agissant sur la chaîne cinématique (2-5) est déterminé et est utilisé pour la régulation du générateur (6).

2. Procédé selon la revendication 1, dans lequel la position angulaire (ϕ_{G}) de la chaîne cinématique (2-5) au niveau de son extrémité côté générateur (6') est déterminée en utilisant un capteur de position côté générateur (8).

3. Procédé selon l'une quelconque des revendications précédentes, dans lequel une position angulaire (ϕ_{R}) de la chaîne cinématique (2-5) à son extrémité côté rotor (6') est déterminée en utilisant un capteur de position côté rotor (7) ou est déduite par le biais d'un modèle issu de différentes grandeurs de générateur, en particulier un couple de générateur électrique (M_{GA}) et une position angulaire du rotor de générateur.

4. Procédé selon l'une quelconque des revendications précédentes, dans lequel on détermine, à partir du couple de torsion (M_{T}, 323) et d'un couple de consigne (M_{A}) fourni par une régulation d'installation (10), un couple de consigne de générateur (M_{GS}) pour la commande du générateur.

5. Procédé selon la revendication 4, dans lequel le couple de consigne de générateur (M_{GS}) est déterminé en respectant une limite de couple de consigne de générateur et/ou une limite de variation du couple de consigne de générateur.

6. Procédé selon l'une quelconque des revendications précédentes, dans lequel, pour la détermination du couple de torsion (M_{T}, 323) et/ou pour déduire la position angulaire (ϕ_{R}) de la chaîne cinématique (2-5), on utilise un modèle (9, 12) reproduisant l'installation de génération d'énergie (100, 200), en particulier sur la base d'un oscillateur rotatif à deux masses.

7. Procédé selon l'une quelconque des revendications précédentes, dans lequel la régulation du générateur (6) est effectuée en respectant une limite de puissance et/ou une limite de variation de puissance.

8. Procédé selon l'une quelconque des revendications précédentes, dans lequel le couple de torsion (M_{T}, 323) est déterminé en continu ou à intervalles temporels discrets.

9. Procédé selon l'une quelconque des revendications précédentes, dans lequel au moins un dispositif de stockage d'énergie (21, 23, 25) raccordé à un circuit intermédiaire de tension continue, à un rotor de générateur et/ou à un stator de générateur du générateur (6) est muni de moyens de conversion courant continu/courant continu (20), de moyens de conversion courant alternatif/courant continu (22) et/ou de moyens de conversion courant alternatif/courant alternatif (24) associés pour lisser une puissance de sortie du générateur (6).

10. Dispositif, en particulier dispositif de régulation pour une installation de génération d'énergie (100, 200), prévu pour mettre en oeuvre un procédé selon l'une quelconque des revendications précédentes.
